(19) Europäisches Patentamt
European Patent Office
Office européen des brevets

(11) Veröffentlichungsnummer: **0 399 954 A2**

# (12) EUROPÄISCHE PATENTANMELDUNG

(21) Anmeldenummer: **90810363.3**

(51) Int. Cl.$^5$: **B32B 31/28, B32B 27/38**

(22) Anmeldetag: **17.05.90**

(30) Priorität: **26.05.89 CH 1980/89**

(43) Veröffentlichungstag der Anmeldung:
**28.11.90 Patentblatt 90/48**

(84) Benannte Vertragsstaaten:
**CH DE ES FR GB IT LI NL SE**

(71) Anmelder: **CIBA-GEIGY AG**
**Klybeckstrasse 141**
**CH-4002 Basel(CH)**

(72) Erfinder: **Strasilla, Dieter, Dr.**
**Efringerstrasse 26**
**D-7858 Weil am Rhein(DE)**
Erfinder: **Stössel, Richard**
**Starenweg 9/1**
**CH-4123 Allschwil(CH)**
Erfinder: **Mülhaupt, Rolf, Prof. Dr.**
**Rötebuckweg 30**
**CH-7800 Freiburg i. Br.(DE)**
Erfinder: **Kreibich, Ursula, Dr.**
**Bettingerstrasse 223**
**CH-4125 Riehen(CH)**

## (54) Verstärkungsmaterial.

(57) Selbstklebendes Verstärkungsmaterial enthaltend
a) eine UV-durchlässige Kunststoff-Folie, worauf
b) ein mit einem partiell acrylatmodifizierten Epoxidharz imprägniertes Gewebe aufgebracht ist, das auf der der Folie a) abgewandten Seite mit
c) einer Schicht eines ebenfalls partiell acrylatmodifizierten Epoxidharzes beschichtet ist,
wobei die Harze von b) und c) durch UV-Bestrahlung in einen gelierten, durch Hitze jedoch weiter härtbaren Zustand übergeführt sind und eine hitzeaktivierbare Härterkomponente enthalten, und
d) ein auf der der Folie a) entgegengesetzten Seite aufgebrachtes Trennpapier,
ist sehr gut geeignet zur Verstärkung von Metallblech.

EP 0 399 954 A2

## Verstärkungsmaterial

Die vorliegende Erfindung betrifft ein selbstklebendes Verstärkungsmaterial, ein Verfahren zu dessen Herstellung sowie dessen Verwendung zum Verstärken von Metallblech.

Verstärkungsmaterialien für Metallbleche sind bekannt. So werden in der US-A 4,374,890 Klebstoffplatten beschrieben, die zwei laminierte Schichten von Epoxidharzen enthalten, die unterschiedliche E-Module aufweisen. So verleiht die Harzschicht mit einem niedrigen E-Modul der Klebstoffplatte die notwendige Haftung an das Substrat, während die Harzschicht mit dem hohen E-Modul der Klebstoffplatte die zur Verstärkung des Metallbleches notwendige Festigkeit verleiht.

Die Laminierung der getrennt herzustellenden Schichten erfolgt durch die Klebeigenschaften der beiden Schichten oder durch Schmelzkleben mittels Erwärmen der Schichten, so dass jedoch die Harzschichten nicht ausgehärtet werden.

Aus der US-A 4,378,395 sind mehrschichtige Verstärkungsmaterialien für z.B. Metallbleche bekannt, die neben zwei Epoxidharzschichten mit unterschiedlichem E-Modul noch eine dritte Schicht enthalten, die aus einem schäumbaren Material besteht, welches bei der Heisshärtung aufschäumt. Die Randzonen dieser Verstärkungsmaterialien sind zwecks Haftung am Substrat nur zweischichtig. Solche Systeme werden in ungehärtetem oder halb-gehärtetem Zustand eingesetzt.

Diese beiden Verstärkungsmaterial-Systeme haben den Nachteil, dass sie sich nur beschränkt lagern lassen, da wegen des sogenannten Kaltflusses nicht ausgehärtetes Harzmaterial an den Randzonen aus den Harz schichten ausfliesst und mit ausfliessendem Harzmaterial aus anderen Klebstoffplatten eines Plattenstapels verklebt, was eine Trennung der einzelnen Platten im Stapel verunmöglicht. Mittels weit überlappenden Trennpapieren wird versucht, diesen Nachteil zu überwinden, was jedoch die mit dem Kaltfluss verbundene Qualitätsverminderung der Randzonen der Platten nicht zu beheben vermag.

Die DE-A 2 706 549 beschreibt ein Verfahren zur Herstellung von Prepregs, worin ein faserförmiges Verstärkungsmaterial mit einer flüssigen Masse, enthaltend ein Epoxidharz und eine photopolymerisierbare Verbindung sowie einen hitzeaktivierbaren Härter für das Epoxidharz und gegebenenfalls einen Photopolymerisationskatalysator, imprägniert wird und durch Bestrahlen mit aktinischer Strahlung in einem festen, jedoch noch heisshärtbaren Zustand übergeführt wird. Es können auch doppelfunktionelle Harze eingesetzt werden.

In der US-A 4,295,907 wird ein kontinuierliches Verfahren zur Herstellung von mit Glasfasern verstärkten Laminaten beschrieben, worin eine UV-durchlässige Folie als Transportträger dient, worauf nacheinander eine erste Harzschicht aufgetragen und durch UV-Bestrahlung geliert, dann eine Schicht von ungesättigtem Polyester und Glasfasern und eine weitere UV-durchlässige Folie als Deckmittel aufgetragen werden. Das so aufgebaute Laminat durchläuft anschliessend eine Hitzezone und eine Kühlzone, worauf die gehärtete Formplatte durch Sägen konfektioniert wird.

Die Möglichkeit, das so aufgebaute Laminat in einem noch heisshärtbaren Zustand zu verwenden, ist nicht erwähnt.

Es besteht ein Bedarf an Verstärkungsmaterial, das selbstklebend, auch auf öligen Substraten, ist, dem Substrat, wie Metallblechen, die benötigte Festigkeit verleiht und sowohl hygienisch zu handhaben als auch gut zu lagern ist.

Es wurde nun überraschend ein Verstärkungsmaterial gefunden, das diesen Anforderungen entspricht und zusätzlich auch im gehärteten Zustand sehr alterungsbeständig ist.

Die vorliegende Erfindung betrifft ein selbstklebendes Verstärkungsmaterial enthaltend

a) eine UV-durchlässige Kunststoff-Folie, worauf

b) ein mit einem partiell acrylatmodifizierten Epoxidharz imprägniertes Gewebe aufgebracht ist, das auf der der Folie a) abgewandten Seite mit

c) einer Schicht eines ebenfalls partiell acrylatmodifizierten Epoxidharzes beschichtet ist, wobei die Harze von b) und c) durch UV-Bestrahlung in einen gelierten, durch Hitze jedoch weiter härtbaren Zustand übergeführt sind und eine hitzeaktivierbare Härterkomponente enthalten, und

d) ein auf der Folie a) entgegengesetzten Seite aufgebrachtes Trennpapier.

Als UV-durchlässige Kunststoff-Folien können im Prinzip alle Folien aus Kunststoffen eingesetzt werden, die im UV-Bereich von 200-400 nm keine Absorption zeigen, sowie gegenüber den eingesetzten Epoxidharzen chemisch resistent sind und einer Temperatur von 180 °C widerstehen. Beispiele für solche Folien sind Folien aus Polyethylen, Polypropylen, Polyamid oder Polyethylenterephthalat. Bevorzugt wird eine Folie aus Polyethylenterephthalat eingesetzt. Die Stärke der Folie wird zweckmässig so gewählt, dass sie gut bieg- und rollbar ist. Sie beträgt bevorzugt 5 - 30 µm, insbesondere 10 - 15 µm.

Die partiell acrylatmodifizierten Epoxidharze, die in den erfindungsgemässen Verstärkungsmaterialien

eingesetzt werden, können durch in an sich bekannte Methoden hergestellt werden wie z.B. durch Umsetzung von Epoxidverbindungen mit mindestens zwei 1,2-Epoxidgruppen pro Molekül mit Acryl- oder Methacrylsäure oder acryl- oder acrylamid-substituierten Carbonsäuren, wobei die Acrylkomponente im stöchiometrischen Unterschuss, bezogen auf den Epoxidgruppengehalt, ist.

Als Epoxidharze, die auf die vorstehende Weise partiell acrylatmodifiziert werden können eignen sich alle Typen von Epoxidharzen, wie beispielsweise solche, die direkt an Sauerstoff-, Stickstoff- oder Schwefelatome gebundene Gruppen der Formel

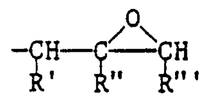

,

worin entweder $R'$ und $R'''$ je ein Wasserstoffatom darstellen, in welchem Fall $R''$ dann ein Wasserstoffatom oder eine Methylgruppe bedeutet, oder $R'$ und $R'''$ zusammen $-CH_2CH_2-$ oder $-CH_2CH_2CH_2-$ darstellen, in welchem Fall $R''$ dann ein Wasserstoffatom bedeutet, enthalten.

Als Beispiele solcher Harze seien Polyglycidyl- und Poly(β-methylglycidyl)-ester genannt, die man durch Umsetzung einer zwei oder mehr Carbonsäuregruppen pro Molekül enthaltenden Verbindung mit Epichlorhydrin, Glycerindichlorhydrin oder β-Methylepichlorhydrin in Gegenwart von Alkali erhalten kann. Solche Polyglycidylester können sich von aliphatischen Polycarbonsäuren, z.B. Oxalsäure, Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren, wie Tetrahydrophthalsäure, 4-Methyltetrahydrophthalsäure, Hexahydrophthalsäure und 4-Methylhexahydrophthalsäure, und von aromatischen Polycarbonsäuren, wie Phthalsäure, Isophthalsäure und Terephthalsäure, ableiten.

Weitere Beispiele sind Polyglycidyl- und Poly-(β-methylglycidyl)-ether, die durch Umsetzung einer mindestens zwei freie alkoholische und/oder phenolische Hydroxylgruppen pro Molekül enthaltenden Verbindung mit dem entsprechenden Epichlorhydrin unter alkalischen Bedingungen, oder auch in Gegenwart eines sauren Katalysators mit nachfolgender Alkalibehandlung, erhältlich sind. Diese Ether lassen sich mit Poly-(epichlorhydrin) aus acyclischen Alkoholen wie Aethylenglykol, Diethylenglykol und höheren Poly-(oxyethylen)-glykolen, Propan-1,2-diol und Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit und Sorbit, aus cycloaliphatischen Alkoholen wie Resorcit, Chinit, Bis-(4-hydroxycyclohexyl)-methan, 2,2-Bis-(4-hydroxycyclohexyl)-propan und 1,1-Bis-(hydroxymethyl)-cyclohexen-3 und aus Alkoholen mit aromatischen Kernen, wie N,N-Bis-(2-hydroxyethyl)-anilin und p,p′-Bis-(2-hydroxyethylamino)-diphenylmethan, herstellen. Man kann sie ferner aus einkernigen Phenolen, wie Resorcin und Hydrochinon, sowie mehrkernigen Phenolen, wie Bis-(4-hydroxyphenyl)-methan, 4,4-Dihydroxydiphenyl, Bis-(4-hydroxyphenyl)-sulfon, 1,1,2,2-Tetrakis-(4-hydroxyphenyl)-ethan, 2,2-Bis-(4-hydroxyphenyl)-propan (sonst als Bisphenol A bekannt) und 2,2-Bis-(3,5-dibrom-4-hydroxyphenyl)-propan sowie aus Aldehyden, wie Formaldehyd, Acetaldehyd, Chloral und Furfurol, mit Phenolen, wie Phenol selbst und durch Chloratome oder Alkylgruppen mit jeweils bis zu neun Kohlenstoffatomen ringsubstituiertem Phenol, wie 4-Chlorphenol, 2-Methylphenol und 4-tert.-Butylphenol, gebildeten Novolaken herstellen.

Poly-(N-glycidyl)-verbindungen umfassen beispielsweise solche, die durch Dehydrochlorierung der Umsetzungsprodukte von Epichlorhydrin mit mindestens zwei Aminowasserstoffatome enthaltenden Aminen, wie Anilin, n-Butylamin, Bis-(4-aminophenyl)-methan und Bis-(4-methyl-aminophenyl)-methan, erhalten werden, Triglycidylisocyanurat sowie N,N′-Diglycidylderivate von cyclischen Alkylenharnstoffen, wie Aethylenharnstoff und 1,3-Propylenharnstoff, und Hydantoinen, wie 5,5-Dimethylhydantoin.

Poly-(S-glycidyl)-verbindungen sind zum Beispiel die Di-S-glycidylderivate von Dithiolen wie Ethan-1,2-dithiol und Bis-(4-mercaptomethylphenyl)-ether.

Beispiele für Epoxidharze mit Gruppen der Formel

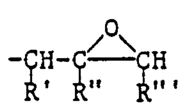

,

worin $R'$ und $R'''$ zusammen eine $-CH_2CH_2-$ oder eine $-CH_2CH_2CH_2-$Gruppe bedeuten, sind Bis-(2,3-epoxycyclopentyl)-ether, 2,3-Epoxycyclopentylglycidylether, 1,2-Bis-(2,3-epoxycyclopentyloxy)-ethan und 3,4-Epoxycyclohexylmethyl-3′,4′-epoxycyclohexancarboxylat.

In Betracht kommen auch Epoxidharze, in welchen die 1,2-Epoxidgruppen an Heteroatome verschiedener Art gebunden sind, z.B. das N,N,O-Triglycidylderivat des 4-Aminophenols, der Glycidylether/Glycidylester der Salicylsäure oder p-Hydroxybenzoesäure, N-Glycidyl-N′-(2-glycidyloxypropyl)-5,5-dimethylhydantoin und 2-Glycidyloxy-1,3-bis-C5,5-dimethyl-1-glycidylhydantoinyl-3)propan.

Gewünschtenfalls kann man Epoxidharzgemische verwenden.

Bevorzugte Epoxidharze sind die Polyglycidylether, Polyglycidylester und N,N′-Diglycidylhydantoine. Speziell bevorzugte Harze sind die Polyglycidylether des 2,2-Bis(4-hydroxyphenyl)-propans und des Bis-(4-hydroxyphenyl)-methans.

Zweckmässig wird das Epoxidharz zu einem 30 Mol-%, bezogen auf die Gesamtmenge des Epoxidharzes, nicht übersteigenden Teil acrylatmodifiziert, bevorzugt zu 1 - 20 Mol-%, insbesondere bevorzugt zu 5 - 10 Mol-%.

Als Acrylatkomponente können auch Acryloligomere eingesetzt werden, wie z.B. carboxylterminierte Butadien-Acrylnitril-Oligomere.

Gewebe, die sich zur erfindungsgemässen Imprägnierung mit den acrylatmodifizierten Epoxidharzen eignen, können z.B. aus natürlichen oder synthetischen Fasern bestehen, wie beispielsweise aus Glas, Bor, Kohlenstoff, Siliciumcarbid oder aromatischem Polyamid. Bevorzugt werden Gewebe aus Glas-, Kohlenstoff- oder aromatischen Polyamidfasern eingesetzt.

Als Imprägnierharz für das Gewebe und als Harz für die Schicht c) können verschiedene oder die gleichen Harze, bevorzugt jedoch die gleichen Harze verwendet werden.

Bevorzugt enthält das Harz c) der Schicht noch zusätzlich einen Füllstoff. Als Füllstoffe kommen beispielsweise in Betracht: Quarzpulver, amorpher Quarz, Talk, Wollastonit, Glashohlkugeln oder amorphes Aluminiumsilikat. Die Teilchengrösse beträgt bevorzugt 5-500 µm.

Bevorzugt sind Glashohlkugeln oder amorphes Aluminiumsilikat.

Als hitzeaktivierbare Härterkomponente für die acrylatmodifizierten Epoxidharze eignen sich beispielsweise Polycarbonsäureanhydride, Dicyandiamid, Komplexe von Aminen, wie ausschliesslich tertiären Aminen, mit Bortrifluorid oder Bortrichlorid, latente Bordifluoridchlorate, aromatische Polyamine und Imidazole, wie z.B. 2-Aethyl-4-methylimidazol. Bevorzugt ist Dicyandiamid.

Die Menge des hitzeaktivierbaren Härters, bezogen auf die Epoxidharzmenge, beträgt vorzugsweise 2 - 20 Gew.%, insbesondere 5 - 15 Gew.%.

Der Härter wird üblicherweise vor dem Imprägnieren oder Beschichten in der Harzkomponente gelöst oder suspendiert.

Weiter kann zum Härter gegebenenfalls noch ein Beschleuniger zugegeben werden. Beispiele für Beschleuniger sind tertiäre Amine, deren Salze oder quaternäre Ammoniumverbindungen, wie 2,4,6-Tris-(dimethylaminomethyl)-phenol, 1-Methylimidazol, Benzyldimethylamin oder Tetramethylammoniumchlorid.

Weiter können die acrylatmodifizierten Epoxidharze noch weitere übliche Zusatzstoffe enthalten, wie z.B. Flexibilisatoren, Verlaufmittel ("flow control agents"), Haftvermittler oder Netzmittel.

Die Herstellung der erfindungsgemässen Verstärkungsmaterialien ist neu.

So betrifft die vorliegende Erfindung weiter ein Verfahren zur Herstellung der erfindungsgemässen Verstärkungsmaterialien umfassend die Schritte

i) Imprägnierung des Gewebes durch Eintauchen in ein partiell acrylatmodifiziertes Epoxidharz, das einen Photopolymerisationskatalysator und einen hitzeaktivierbaren Härter enthält, und Entfernen des überschüssigen Harzes,

ii) einseitiges Aufbringen einer für UV-Strahlung durchlässigen Kunststoff-Folie, so dass sich die Folie an der Unterseite des imprägnierten Gewebes befindet,

iii) Aufbringen einer Schicht eines partiell acrylatmodifizierten Epoxidharzes, das einen Photopolymerisationskatalysator und einen hitzeaktivierbaren Härter für das Epoxidharz enthält, auf die Oberseite des Gewebes,

iv) beidseitiges Belichten des imprägnierten und beschichteten Gewebes zur Gelierung der acrylatmodifizierten Epoxidharze durch Photopolymerisation der Acrylatgruppen, wobei die Belichtung mit UV-Licht erfolgt und von unten durch die UV-durchlässige Folie vorgenommen wird, und

v) Aufbringen eines Trennpapieres auf der der Folie entgegengesetzten Seite.

Nach Schritt iv) können gegebenenfalls der Beschichtungsschritt iii) und der Belichtungsschritt iv) ein- oder mehrmals wiederholt werden, wobei diese Belichtung jeweils nur von der Seite der neuaufgebrachten Schicht her erfolgt.

Das Verfahren kann grundsätzlich stückweise oder kontinuierlich durchgeführt werden.

Die kontinuierliche Verfahrensweise ist bevorzugt.

Das kontinuierliche Verfahren ist dadurch gekennzeichnet, dass das Gewebe kontinuierlich durch das Imprägnierungsbad läuft und die Folie anschliessend von unten zugeführt und von oben die Harzschicht aufgebracht wird und das so imprägnierte, beschichtete Gewebe mit der Folie in eine Bestrahlungsapparatur geführt wird und nach der Gelierung des Harzes das Trennpapier kontinuierlich aufgebracht wird, wobei das Gewebe durch Zug auf der Produkteseite vorwärts bewegt wird.

Vorzugsweise werden die Harzkomponenten zur Imprägnierung und zur Beschichtung bei erhöhter Temperatur, insbesondere bei 50 - 100 °C, gehalten, damit die Harze infolge der erniedrigten Viskosität besser in das Gewebe eindringen können respektive bei der Beschichtung durch besseres Verlaufen eine gleichmässige Schicht ergeben.

Als Photopolymerisationskatalysator geeignet sind z.B. organische Peroxide und Hydroperoxide, α-halogensubstituierte Acetophenone, wie 2,2,2-Trichlor-4′-tert.-butylacetophenon, Benzoin und dessen Alkylether, z.B. der n-Butylether, Benzophenone, O-Alkoxycarbonylderivate der Oxime von Benzil oder 1-Phenylpropan-1,2-dion, wie Benzil-(O-ethoxycarbonyl)-α-monoxim oder Benzilketale, z.B. dessen Dimethylketal. Bevorzugt wird Benzildimethylketal.

Im allgemeinen werden 0,1 bis 20 Gew.-%, und vorzugsweise 0,5 bis 15 Gew.-%, Photopolymerisationskatalysator eingesetzt, bezogen auf das Gesamtgewicht der photopolymerisierbaren Verbindungen.

Beim Photopolymerisierungsvorgang verwendet man vorzugsweise UV-Strahlung einer Wellenlänge von 200 - 400 nm. Als Strahlungsquellen eignen sich sowohl Punktquellen als auch flächenförmige Strahler (Lampenteppiche), wobei beispielsweise Kohlelichtbögen, Quecksilberdampflichtbögen, Leuchtröhren mit UV-Licht ausstrahlenden Leuchtstoffen, Argon- und Xenonglimmlampen oder Metallhalogenidlampen eingesetzt werden können. Vorzugsweise werden Quecksilberdampflichtbögen und Metallhalogenidlampen eingesetzt.

Die zur Belichtung des photopolymerisierbaren Harzteils erforderliche Zeit wird von verschiedenen Faktoren abhängen, wie beispielsweise dem individuellen verwendeten Harz, der Menge dieses Harzes auf dem Gewebe (Schichtdicke), der Art der Lichtquelle und ihrem Abstand vom imprägnierten Material.

Der mit Photopolymerisationsmethoden vertraute Fachmann kann die geeigneten Zeiten leicht bestimmen, aber in allen Fällen muss das Produkt nach der Photopolymerisation noch heisshärtbar sein; aus diesem Grund erfolgt die Photopolymerisation bei Temperaturen unterhalb derjenigen, bei denen weitgehende Härtung des Epoxidteils des acrylmodifizierten Epoxidharzes durch den hitzeaktivierbaren Härter eintreten würde.

Die Schichtdicke des Harzes c) beträgt zweckmässigerweise 0,3 - 20 mm bevorzugt 0,3 - 10 mm. Diese kann beim Beschichten auf für den Fachmann bekannte Weise eingestellt werden z.B. durch die Grösse der Oeffnung im Beschichtungsvorratsgefäss und die Variierung der Beschichtungsgeschwindigkeit oder bevorzugt durch den Einsatz eines Rakels.

Die Trennpapiere, die eingesetzt werden können, müssen sich von dem gelierten Verstärkungsmaterial ohne Mühe entfernen lassen und sind dem Fachmann bekannt. Insbesondere geeignet sind Silikon-Trennpapiere.

Die erfindungsgemässen Verstärkungsmaterialien besitzen eine gute Klebrigkeit auf diversen Substraten, insbesondere auf öligem Metallblech. Im weiteren weisen sie ein gutes Cold-Flow Verhalten auf; d.h. unter Druck, wie er beim Lagern in Stapeln auftritt, bleibt das erfindungsgemässe Verstärkungsmaterial formstabil und fliesst nicht aus.

Bevorzugt sind Verstärkungsmaterialien mit einem Cold-Flow-Index $\leq$ 1,5. Dieser ist definiert als Quotient aus der Fläche nach Belastung und Fläche vor der Belastung einer Materialprobe, die bei Raumtemperatur 1 Stunde einem Druck von ca. 1 bar ausgesetzt wurde.

Daher sind die erfindungsgemässen Verstärkungsmaterialien sehr gut geeignet zur Verwendung als selbstklebende Verstärkung von Metallblech. Solche Verstärkungen sind leichtgewichtig und daher gut geeignet für den Apparatebau sowie die Fahrzeug- und Luftfahrtindustrie, wo die Gewichtsreduktion eine grosse Rolle spielt.

Dabei kann wegen der guten Flexibilität das Verstärkungsmaterial sehr gut auf verformte Metallbleche aufgebracht werden.

Die hygienischen Bedingungen lassen sich gut einhalten bei der Verarbeitung und Härtung der erfindungsgemassen Verstärkungsmaterialien, da die UV-durchlässige Kunststoff-Folie nicht entfernt werden muss. Dadurch wird auch die Oberfläche schön glatt und es treten keine Verstärkungsfasern aus dem Harz aus.

In den nachfolgenden Beispielen sind alle Angaben, sofern nichts anderes vermerkt ist, Gewichtsangaben, wie z.B. Gew.-% oder Gew.-T.

Beispiel 1:

Ein Glasfasergewebe der Dicke 0,6 mm (der Firma Glastex, Horgen CH) wird mit einer Geschwindigkeit

von 0,5 m/Min. durch eine Imprägnierharzformulierung geführt, die sich in einer Wanne befindet, eine Temperatur von 60 °C aufweist und die folgende Zusammensetzung besitzt:

| | |
|---|---|
| Bisphenol-A-diglycidylether | 54,16 % |
| Bisphenol-A-diglycidylether-mono-methacrylat | 15,00 % |
| Adipinsäure Neopentylglykol-Polyester | 25,00 % |
| Dicyandiamid | 4,37 % |
| Gemisch aus Polyvinylphenol und 2,4,6-Tris(dimethylaminomethyl)-phenol | 0,72 % |
| Benzildimethylketal | 0,24 % |
| Glycidoxypropyltrimethoxysilan | 0,50 % |

Anschliessend wird überschüssiges Harzmaterial über Rollen abgequetscht und von unten eine 12 µm starke Polyethylenterephtalat-Folie bei gleicher Geschwindigkeit wie das imprägnierte Gewebe auf dieses aufgebracht.

Das so auf der Unterseite abgedeckte Gewebe wird nun auf der Oberseite mittels eines Rakels bei 80 °C mit einer ca. 1 mm dicken Schicht einer Harzformulierung der folgenden Zusammensetzung beschichtet:

| | |
|---|---|
| Bisphenol-A-diglycidylether | 51,82 % |
| Bisphenol-A-diglycidylether-di-methacrylat | 6,70 % |
| Adipinsäure-Neopentylglykolpolyester | 21,10 % |
| Amorphes Aluminiumsilikat, Teilchengrösse 5-150 µm, scheinb. sp. Gew. 0,23 g/cm$^3$ | 15,00 % |
| Dicyandiamid | 3,82 % |
| Gemisch aus Polyvinylphenol und 2,4,6-Tris-(dimethylaminomethyl)-phenol | 0,63 % |
| Benzildimethylketal | 0,21 % |
| Glycidoxypropyltrimethoxysilan | 0,50 % |
| Fluorierter Alkylester (3M, USA) | 0,25 % |

Das so beschichtete und unten mit der UV-durchlässigen Polyethylenterephthalat-Folie abgedeckte imprägnierte Glasfasergewebe durchläuft nun mit der gleichen Geschwindigkeit eine Bestrahlungskammer, wo das Material beidseitig durch einen Hg-Hochdruckstrahler (IST-UV-Strahler der Firma Metz GmbH, Nürtingen, BRD) mit UV-Licht der Wellenlänge 365 nm und einer Belichtungsmenge von ca. 1000 mJ/cm$^2$ bestrahlt wird.

Nach der Gelierung der Harzformulierungen wird kontinuierlich ein Silikon-Trennpapier (94 g/m$^2$) auf der Schichtseite aufgebracht und so das Verstärkungsmaterial vervollständigt.

Die Vorwärtsbewegung des Verstärkungsmaterials resp. des Glasfasergewebes erfolgt durch einen Raupenabzug auf der Seite des fertigen Verstärkungsmaterials mit einer Geschwindigkeit von 0,5 m/Min.

Beispiele 2 und 3:

Nach der in Beispiel 1 dargestellten Methode wird ein gleiches Glasfasergewebe imprägniert, abgedeckt, beschichtet und belichtet, wobei die Imprägnierharzformulierungen und Beschichtungsharzformulierungen die in Tabelle 1 wiedergegebenen Zusammensetzungen aufweisen.

Tabelle 1

| Imprägnierharzformulierung | Beispiel 2 [%] | Beispiel 3 [%] |
|---|---|---|
| Bisphenol-A-diglycidylether | 35,74 | 50,94 |
| Epoxidharz auf Bisphenol-A-Basis EP 2,55-2,70 Aeq./kg | 13,33 | |
| Bisphenol-A-diglycidylether-mono-methacrylat | 10,00 | 30,00 |
| Carboxylterminiertes Butadien-Acrylnitril-Oligomer | 15,00 | 14,99 |
| Dibutylzinndilaurat | 0,02 | 0,02 |
| $C_9$-Kohlenwasserstoffharz (Firma Nevcin, Uithoorn NL) | 20,00 | |
| Dicyandiamid | 4,81 | 3,84 |
| Gemisch aus Polyvinylphenol mit 2,4,6-Tris-(dimethylaminomethyl)-phenol | 0,79 | |
| Benzildimethylketal | 0,26 | 0,21 |
| **Beschichtungsharzformulierung** | | |
| Bisphenol-A-diglycidylether | 29,92 | 52,84 |
| Epoxidharz auf Bisphenol-A-Basis EP 2,55-2,70 Aeq./kg | 11,16 | |
| Bisphenol-A-diglycidylether-mono-methacrylat | 8,37 | 8,75 |
| Carboxylterminiertes Butadien-Acrylnitril-Oligomer | 12,56 | 13,10 |
| Dibutylzinndilaurat | 0,01 | |
| $C_9$-Kohlenwasserstoffharz (Firma Nevcin, Uithoorn NL) | 16,74 | 8,75 |
| Glashohlkugeln $\phi$ 5-250 µm ASTMD3101-72 0,19 ± 10 % | 16,30 | |
| Amorphes Aluminiumsilikat $\phi$ 5-150 µm scheinb. spez. Gew. g/cm³ 0,23 | | 12,50 |
| Dicyandiamid | 4,02 | 3,44 |
| Gemisch aus Polyvinylphenol und 2,4,6-Tris-(dimethylaminomethyl)-phenol | 0,66 | |
| Benzildimethylketal | 0,22 | 0,19 |
| Triphenylphosphin | | 0,02 |
| Glycidoxypropyltrimethoxysilan | | 0,41 |

Beispiel 4:

Die Haftkraft der nicht UV-gelierten Harzformulierungen wird wie folgt geprüft.

Gemäss DIN 53283 werden geölte Stahlplatten verklebt und 30 Min. bei 180 °C gehärtet und anschliessend die Haftung im Zugscherversuch bestimmt.

Die Resultate sind in Tabelle 2 wiedergegeben.

Tabelle 2

| Imprägnierungsharzformulierung gemäss Bsp. | Beschichtungsharzformulierung gemäss Bsp. | Haftung beim Reissen [N/mm²] | |
|---|---|---|---|
| | | 23 °C | 80 °C |
| 1 | | 21,4 | 12,2 |
| 3 | | 13,9 | |
| | 1 | 21,6 | 13,3 |
| | 3 | 18,9 | |

Beispiel 5:

Die Biegefestigkeit eines mit dem Verstärkungsmaterial verstärkten Metallbleches wird wie folgt

bestimmt:

Ein Stück (170 x 25 x 1,6 mm) des UV-gelierten Verstärkungsmaterials wird nach Entfernen des Trennpapiers mit der Schichtseite auf ein geöltes Stahlblech (170 x 25 x 0,5 mm) aufgebracht und anschliessend während 30 Min. bei 180° C im Umluftofen gehärtet.

Der so gehärtete Prüfkörper wird mit der Blechseite nach oben auf eine Auflagevorrichtung aufgelegt, wobei der Prüfkörper auf zwei Stützen mit je einem Stützradius von 5 mm und einer Horizontaldistanz von 100 mm liegt. Von oben wird ein Stempel mit einem Stempelkopfradius von 5 mm mit einer Geschwindigkeit von 5 mm/Min. auf den Prüfkörper gedrückt, bis dieser 3 mm Durchbiegung aufweist, und die dazu notwendige Kraft bestimmt.

Darauf wird der Stempel mit einer Geschwindigkeit von 10 mm/Min. weiter nach unten auf den Prüfkörper gedrückt, bis der Bruch des gehärteten Verstärkungsmaterials erfolgt. An diesem Punkt werden erneut die Kraft und die Durchbiegung beim Bruch gemessen.

Die Resultate sind in Tabelle 3 wiedergegeben.

Tabelle 3

| Verstärkungsmaterial gemäss Beispiel | Kraft [daN] 3 mm | Kraft [daN] Bruch | Weg [mm] Bruch |
|---|---|---|---|
| 1 | 5,7 | 18,0 | 22,5 |
| 2 | 5,8 | 22,8 | 22,4 |
| 3 | 6,2 | 19,0 | 20,0 |

Beispiel 6:

Ein Stück (60 x 70 mm) des UV-gelierten Verstärkungsmaterials wird nach Entfernen des Trennpapiers mit der Schichtseite auf ein Stahlblech (70 x 110 mm) aufgebracht, das durch Tauchen in eine 10 %ige Mineralöl-Lösung in Heptan geölt ist. Nach 5 Min. (Oelaufnahme) wird der Prüfkörper 10 Min. in ein handelsübliches Entfettungsbad bei 60° C gebracht, darauf mit Wasser abgespült und 10 Min. in ein handelsübliches Phosphatierbad getaucht. Anschliessend wird der Prüfkörper mit der Metallseite nach oben 30 Min. bei 180° C im Umluftofen gehärtet.

Der Test gilt als bestanden, wenn das Verstärkungsmaterial nicht vom Stahlblech abfällt.

Verstärkungsmaterial gemäss Beispiel 3: bestanden.

Beispiel 7:

Die Glasübergangstemperatur Tg wird mit einem Mettler TA 3000-System nach der TMA-Methode an Proben bestimmt, die 30 Min. bei 180° C im Umluftofen gehärtet werden.

Die Resultate sind in Tabelle 4 wiedergegeben.

Tabelle 4

| Verstärkungsmaterial gemäss Beispiel | Tg [° C] |
|---|---|
| 1 | 73,4 |

Beispiel 8: Cold-Flow-Test:

Proben von UV-geliertem Verstärkungsmaterial der Grösse 20 x 20 x 1,8 mm werden mit 4 kg während 1 Std. bei Raumtemperatur (~23 °C) belastet (≦ 1 bar).

Nach dieser Zeit wird die ausgepresste Fläche bestimmt. Dies erfolgt durch Planimetrieren der Flächen von Fotokopien oder durch Ausschneiden und Wägen derselben.

Der Cold-Flow-Index wird wie folgt berechnet:

$$\text{Cold-Flow-Index} = \frac{\text{Fläche nach der Belastung}}{\text{Fläche vor der Belastung}}$$

Es werden 4 Bestimmungen gemacht und der Mittelwert berechnet.

Die Resultate sind in Tabelle 5 wiedergegeben.

Tabelle 5

| UV-geliertes Verstärkungsmaterial gemäss Beispiel | Cold-Flow-Index |
|---|---|
| 1 | 1,0 |
| 2 | 1,1 |
| 3 | 1,5 |

## Ansprüche

1. Selbstklebendes Verstärkungsmaterial enthaltend
a) eine UV-durchlässige Kunststoff-Folie, worauf
b) ein mit einem partiell acrylatmodifizierten Epoxidharz imprägniertes Gewebe aufgebracht ist, das auf der der Folie a) abgewandten Seite mit
c) einer Schicht eines ebenfalls partiell acrylatmodifizierten Epoxidharzes beschichtet ist,
wobei die Harze von b) und c) durch UV-Bestrahlung in einen gelierten, durch Hitze jedoch weiter härtbaren Zustand übergeführt sind und eine hitzeaktivierbare Härterkomponente enthalten; und
d) ein auf der der Folie a) entgegengesetzten Seite aufgebrachtes Trennpapier.

2. Selbstklebendes Verstärkungsmaterial gemäss Anspruch 1, worin die partielle Acrylatmodifizierung der Epoxidharze 1 - 20 Mol-% bezogen auf die Gesamtmenge des Epoxidharzes beträgt.

3. Selbstklebendes Verstärkungsmaterial gemäss Anspruch 1, worin die Harze von b) und c) gleich sind.

4. Selbstklebendes Verstärkungsmaterial gemäss Anspruch 1, worin das Epoxidharz c) zusätzlich einen Füllstoff enthält.

5. Selbstklebendes Verstärkungsmaterial gemäss Anspruch 1, worin die Schicht c) eine Dicke von 0,3 - 10 mm aufweist.

6. Selbstklebendes Verstärkungsmaterial gemäss Anspruch 1, worin die hitzeaktivierbare Härterkomponente für das Epoxidharz Dicyandiamid ist.

7. Selbstklebendes Verstärkungsmaterial gemäss Anspruch 1, worin der Cold-Flow-Index einen Wert von ≦ 1,5 aufweist.

8. Selbstklebendes Verstärkungsmaterial gemäss Anspruch 1, worin die Folie a) eine Polyethylen-, eine Polypropylen-, eine Polyamid- oder eine Polyethylenterephthalat-Folie ist.

9. Selbstklebendes Verstärkungsmaterial gemäss Anspruch 1, worin das Gewebe aus Glas-, Kohlenstoff- oder aromatischen Polyamidfasern besteht.

10. Verfahren zur Herstellung von selbstklebendem Verstärkungsmaterial nach Anspruch 1 umfassend die Schritte

i) Imprägnierung des Gewebes durch Eintauchen in ein partiell acrylatmodifiziertes Epoxidharz, das einen Photopolymerisationskatalysator und einen hitzeaktivierbaren Härter enthält, und Entfernen des

überschüssigen Harzes,

ii) einseitiges Aufbringen einer für UV-Strahlung durchlässigen Kunststoff-Folie, so dass sich die Folie an der Unterseite des imprägnierten Gewebes befindet,

iii) Aufbringen einer Schicht eines partiell acrylatmodifizierten Epoxidharzes, das einen Photopolymerisationskatalysator und einen hitzeaktivierbaren Härter für das Epoxidharz enthält, auf die Oberseite des Gewebes,

iv) beidseitiges Belichten des imprägnierten und beschichteten Gewebes zur Gelierung der acrylatmodifizierten Epoxidharze durch Photopolymerisation der Acrylatgruppen, wobei die Belichtung mit UV-Licht erfolgt und von unten durch die UV-durchlässige Folie vorgenommen wird, und

v) Aufbringen eines Trennpapieres auf der der Folie entgegengesetzten Seite.

11. Verfahren gemäss Anspruch 10,worin das Verfahren ein kontinuierliches Verfahren ist, dadurch gekennzeichnet, dass das Gewebe kontinuierlich durch das Imprägnierungsbad läuft und anschliessend von unten die Folie zugeführt und von oben die Harzschicht aufgebracht wird und das so imprägnierte, beschichtete Gewebe mit der Folie in eine Bestrahlungsapparatur geführt wird und nach der Gelierung des Harzes das Trennpapier kontinuierlich aufgebracht wird, wobei das Gewebe durch Zug auf der Produkteseite vorwärts bewegt wird.

12. Verwendung des selbstklebenden Verstärkungsmaterials nach Anspruch 1 zur Verstärkung von Metallblech.

Patentansprüche für folgenden Vertragsstaat: ES

1. Verfahren zur Herstellung von selbstklebendem Verstärkungsmaterial enthaltend

a) eine UV-durchlässige Kunststoff-Folie, worauf

b) ein mit einem partiell acrylatmodifizierten Epoxidharz imprägniertes Gewebe aufgebracht ist, das auf der der Folie a) abgewandten Seite mit

c) einer Schicht eines ebenfalls partiell acrylatmodifizierten Epoxidharzes beschichtet ist,

wobei die Harze von b) und c) durch UV-Bestrahlung in einen gelierten, durch Hitze jedoch weiter härtbaren Zustand übergeführt sind und eine hitzeaktivierbare Härterkomponente enthalten, und

d) ein auf der der Folie a) entgegengesetzten Seite aufgebrachtes Trennpapier, umfassend die Schritte

i) Imprägnierung des Gewebes durch Eintauchen in ein partiell acrylatmodifiziertes Epoxidharz, das einen Photopolymerisationskatalysator und einen hitzeaktivierbaren Härter enthält, und Entfernen des überschüssigen Harzes,

ii) einseitiges Aufbringen einer für UV-Strahlung durchlässigen Kunststoff-Folie, so dass sich die Folie an der Unterseite des imprägnierten Gewebes befindet,

iii) Aufbringen einer Schicht eines partiell acrylatmodifizierten Epoxidharzes, das einen Photopolymerisationskatalysator und einen hitzeaktivierbaren Härter für das Epoxidharz enthält, auf die Oberseite des Gewebes,

iv) beidseitiges Belichten des imprägnierten und beschichteten Gewebes zur Gelierung der acrylatmodifizierten Epoxidharze durch Photopolymerisation der Acrylatgruppen, wobei die Belichtung mit UV-Licht erfolgt und von unten durch die UV-durchlässige Folie vorgenommen wird, und

v) Aufbringen eines Trennpapieres auf der der Folie entgegengesetzten Seite.

2. Verfahren gemäss Anspruch 1, worin die partielle Acrylatmodifizierung der Epoxidharze 1 - 20 Mol-% bezogen auf die Gesamtmenge des Epoxidharzes beträgt.

3. Verfahren gemäss Anspruch 1, worin die Harze von b) und c) gleich sind.

4. Verfahren gemäss Anspruch 1, worin das Epoxidharz c) zusätzlich einen Füllstoff enthält.

5. Verfahren gemäss Anspruch 1, worin die Schicht c) eine Dicke von 0,3 - 10 mm aufweist.

6. Verfahren gemäss Anspruch 1, worin die hitzeaktivierbare Härterkomponente für das Epoxidharz Dicyandiamid ist.

7. Verfahren gemäss Anspruch 1, worin der Cold-Flow-Index einen Wert von $\leq$ 1,5 aufweist.

8. Verfahren gemäss Anspruch 1, worin die Folie a) eine Polyethylen-, eine Polypropylen-, eine Polyamid- oder eine Polyethylenterephthalat-Folie ist.

9. Verfahren gemäss Anspruch 1, worin das Gewebe aus Glas-, Kohlenstoff-oder aromatischen Polyamidfasern besteht.

10. Verfahren gemäss Anspruch 1, worin das Verfahren ein kontinuierliches Verfahren ist, dadurch gekennzeichnet, dass das Gewebe kontinuierlich durch das Imprägnierungsbad läuft und anschliessend von unten die Folie zugeführt und von oben die Harzschicht aufgebracht wird und das so imprägnierte, beschichtete Gewebe mit der Folie in eine Bestrahlungsapparatur geführt wird und nach der Gelierung des Harzes das Trennpapier kontinuierlich aufgebracht wird, wobei das Gewebe durch Zug auf der Produkteseite vorwärts bewegt wird.

11. Verwendung des selbstklebenden Verstärkungsmaterials nach Anspruch 1 zur Verstärkung von Metallblech.